Europäisches Patentamt

European Patent Office

Office européen des brevets

(11) Publication number: **0 196 763**
**B1**

(12) **EUROPEAN PATENT SPECIFICATION**

(45) Date of publication of patent specification: **02.01.91**

(21) Application number: **86301252.2**

(22) Date of filing: **21.02.86**

(51) Int. Cl.⁵: **A 01 G 25/02**

(54) Drip irrigator tape.

(30) Priority: **01.03.85 US 707082**

(43) Date of publication of application:
**08.10.86 Bulletin 86/41**

(45) Publication of the grant of the patent:
**02.01.91 Bulletin 91/01**

(84) Designated Contracting States:
**AT BE CH DE FR GB IT LI LU NL SE**

(56) References cited:
**US-A-4 047 995**
**US-A-4 247 051**
**US-A-4 385 727**

(73) Proprietor: **Roberts, James C.**
**2822 Pasatiempo Glen**
**Escondido California 92025 (US)**

(72) Inventor: **Roberts, James C.**
**2822 Pasatiempo Glen**
**Escondido California 92025 (US)**

(74) Representative: **Wilson, Nicholas Martin et al**
**WITHERS & ROGERS 4 Dyer's Buildings Holborn**
**London EC1N 2JT (GB)**

## Description

This invention relates to a method of fabricating tubing suitable for drip irrigation.

The drip irrigation system is far less noticeable than many of its counterparts. Instead of spraying large amounts of water over the crops, it supplies less water more effectively through lengths of tubing placed near the roots where drops of water emitted through small outlets moisten the soil just the right amount. Crops improve, salt accumulation and fertilizer loss decreases, and water is conserved.

In addition to its low profile and effective performance, this clever and inherently simple technique is easier and less expensive. As a result, it has come into such widespread use that many miles of irrigation tubing are in demand, the generally flat plastic tubing called drip irrigation tape being especially popular.

This type of tubing lies flat for easy handling. It can be rolled up on reels for transportation and to ease distribution over a field. Once water is introduced, it swells like the perforated sprinkling hose used to water the front lawn, and as water flows under pressure within, outlets along the tubing emit drops of water into the soil to water the crops at their roots where most needed and at a rate most beneficial.

Much of today's drip irrigation tape is fabricated from a thin pliable plastic strip folded lengthwise. The two edges are overlapped and joined together to form a flat hollow tape that may be on the order of one inch wide. Under pressure, it swells toward the general shape of cylindrical tubing with an inside diameter that may be about 1.6 cm (five-eighths inch). This is the main conduit for irrigation water—the main passageway for water flowing to crops under irrigation.

But unlike sprinkling hose, drip irrigation tape also employs a much smaller secondary conduit. It is usually located along the seam formed by the overlapping edges of the plastic strip and it extends along the tape adjacent the main conduit as a narrow passageway that helps reduce the rate at which water is emitted into the soil. Water supplied to the main conduit spends its energy finding its way into the secondary conduit through a series of inlets interconnecting the two, and then forcing its way along the secondary conduit to a series of outlets where it slowly trickles out drop by drop into the soil.

This is the secret of drip irrigation tape that makes it so effective—slow built-in leaks evenly spaced along its length—and the design details accomplishing this are critical to inexpensive manufacture and successful operation in a drip irrigation system. By focussing on these details, we can appreciate some of the problems in existing designs that need to be overcome.

The seam and secondary conduits are especially important. The seam in some designs, for example, is formed by joining the overlapping edges of the plastics strip together with an adhesive applied lengthwise down the tape in two fine parallel lines, the space between the two adhesive beads serving as the secondary conduit. One such design employs thin monofilament fishing line that is first dipped in adhesive and then applied between the edges to form the beads.

While these designs employ the expedient of making the secondary conduit part of the seam, they have certain drawbacks. In the first place, the adhesive beads constitute additional material and additional steps in the fabrication process. They must be accurately applied and carefully controlled to maintain dimensioning that will achieve a consistent drip rate along the tape.

Furthermore, the secondary conduit is often prone to collapse due to an apparent electrostatic affinity of the overlapping edges for each other. Whether in manufacturing, through handling, or while buried in the middle of a field under irrigation, the secondary conduit often becomes deformed so that the overlapping edges of the plastics strip touch and stick together in the gap between the adhesive beads. When this happens, the secondary conduit becomes blocked and the tape malfunctions.

Other designs have their drawbacks also. For instance, the needle holes of a stitched seam used as outlets in one design and the laser-cut slits in another often become blocked by soil or particulate material in the irrigation water and the tape malfunctions. In addition, fabrication is more involved.

US—A—4 247 051 describes a typical irrigation hose of the type already described which is in accordance with the preamble of the appended claim 1. In this arrangement the secondary conduit is formed by interposing two elongate ridges or beads of adhesive between the overlapping side edges of the strip. Such a construction suffers from the technical problems previously mentioned. Moreover, care must be taken during fabrication to ensure that the pressure used to join the side edges does not compress or flatten the secondary conduit in such a way as to unduly restrict fluid flow.

In order to overcome these problems the tubing structure of the present invention is characterised by the fabrication steps of extruding the strip, molding the first side edge portion of the strip while the material of the strip is still molten to form an indented groove in the first side edge portion, folding the strip with said overlapping edge portions in face-to-face contact and joining said edge portions in face-to-face contact whereby the seal lines are formed on opposite sides of the groove which defines the secondary conduit, the secondary conduit being of height equal to the depth of the groove.

The groove is dimensioned to impede fluid flowing through the secondary conduit as a means of achieving a desired drip rate along the tape exterior without relying on outlet dimensioning. This feature combined with resistance to deformation and ease of fabrication alleviates many concerns normally associated with drip irrigation tape.

The above and other objects and advantages of the invention will become more fully apparent upon reading the detailed description in conjunction with the accompanying drawings.

## Brief description of the drawings

Figure 1 of the drawings is a perspective view of an unfolded portion of the flexible strip used in the illustrated embodiment of the tubing structure, showing the performed edge portion prior to folding;

Figure 2 is an enlarged detail of the flexible strip showing the junction of the groove with a pair of inlet channels;

Figure 3 illustrates the folding of the flexible strip into the tubing;

Figure 4 is an enlarged sectional view taken on line 4-4 of Figure 3;

Figure 5 is a top plan view of a portion of the completed tubing;

Figure 6 is a side elevation view of the tubing;

Figure 7 is an enlarged sectional view taken on line 7-7 of Figure 6;

Figure 8 is an enlarged sectional view taken on line 8-8 of Figure 6;

Figure 9 is a perspective view of an unfolded portion of the flexible strip used in alternate embodiment of the tubing structure;

Figure 10 illustrates the alternate embodiment partially folded; and

Figure 11 is an enlarged sectional view of a portion of the alternate embodiment taken of line 11-11 of Figure 10.

## Detailed description

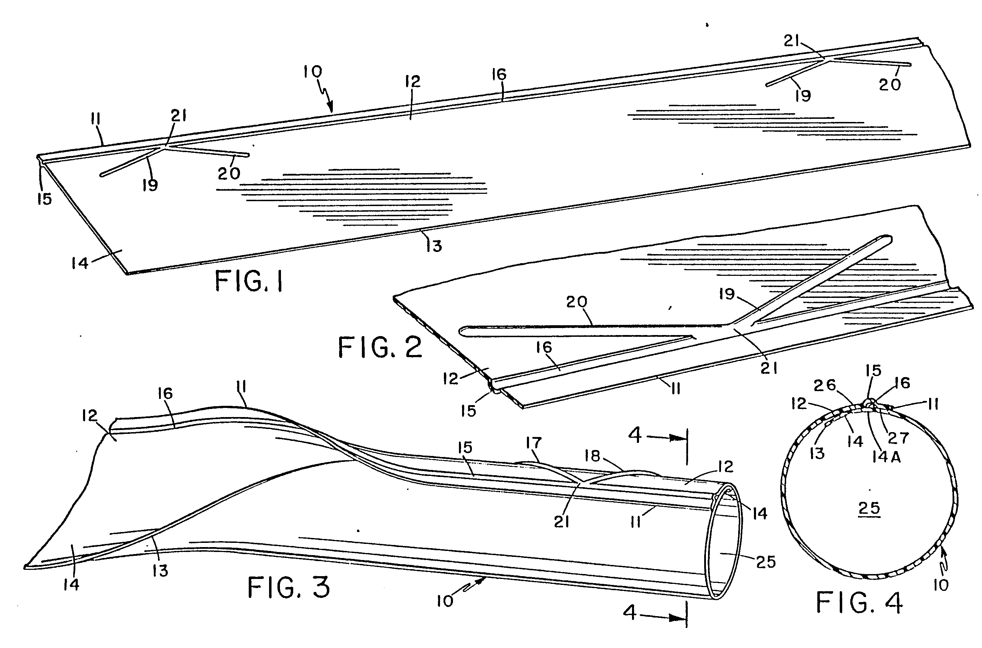

An unfolded portion of the flexible strip used in the illustration embodiment of the drip irrigation tape is shown in Figures 1 and 2 where it is referred to generally by reference numeral 10 and shown to include a thin flexible film of water impervious material, such as polyethylene. The strip is suitably dimensioned for folding into a piece of tubing, the illustrated embodiment being on the order of 6.67 cm (2-5/8 inches) wide and 0.1—0.64 mm (4—25 mils) thick. It is folded and the edges jointed together in the finished tubing to form a first conduit, the main conduit through which water flows to crops under irrigation.

Adjacent longitudinally-extending edge 11 of strip 10 is first edge portion 12 that extends lengthwise along the strip. And adjacent longitudinally-extending edge 13 of strip 10 is second edge portion 14 which also extends lengthwise along the strip. One of these edge portions is preformed with a groove while the other is retained relatively flat.

First edge portion 12 is preformed so that preformed portion 15 defines groove 16 extending lengthwise along the strip. This may be accomplished by suitable means such as heating the strip until it is formable (around 205°C (400 degrees fahrenheit) for the polyethylene of the illustrated embodiment) and pressing it between rollers that are shaped to preform the groove into the first edge portion. The strip is then cooled with a preformed groove that is resistant to deformation remaining.

The illustrated embodiment is also preformed in a similar manner to define pairs of inlet channels at spaced apart locations along the strip. Inlet channels 19 and 20 are two such channels. They are defined by preformed portion 18 (Figure 3), and they intersect groove 16 of the illustrated embodiment at junctions suitably spaced along the strip, the junctions designated reference numeral 21 being representative and spaced at one-foot intervals (Figures 1 and 2). Like groove 16, these inlet channels are dimensioned to provide a slow flow of water, those of the illustrated embodiment having a generally semicircular shape with a radius on the order of 1.27 mm (50 mils). The inlet channels may be slightly larger than groove 16, and they serve with other features of the finished tubing as means for maintaining the first conduit in fluid communications with a secondary conduit defined by groove 16.

The manner in which strip 10 is folded lengthwise to form the tubing structure is illustrated in Figures 3 and 4. The tubing structure usually lying generally flat after folding, although it is shown circular for the purposes of illustration. First edge portion 12 and second edge portion 14 of the folded strip overlap to form first conduit 25, the main conduit or passageway for irrigation water. The folding may be accomplished by suitable known means such as passing the strip through a folding device that rolls one edge portion up over the other edge portion to obtain the configuration illustrated in Figures 3 and 4.

With the strip folded lengthwise, the two edge portions are joined together on opposite sides of groove 16 by suitable means such as heat sealing. This forms a seam extending lengthwise down the tubing in which groove 16 defines a secondary conduit. The heat sealing may be accomplished by pressing the two edge portions together on either side of the groove while applying sufficient heat to cause the two edge portions to bond together (around 205°C (400 degrees fahrenheit) for the polyethylene of the illustrated embodiment). Suitable means such as passing the folded strip between heated rollers configured to apply opposing pressure to the two edge portions along opposite sides of the groove may be employed to produce the heat sealed seam.

The sectional view of Figure 4 illustrates the heat sealed seam of the illustrated embodiment. It includes heat sealed portion 26 extending along one side of groove 16 and heat sealed portion 27 extending along the opposite side of the groove. The second edge portion covers the groove so that the groove defines a secondary conduit within the seam extending lengthwise down the tape. This secondary conduit impedes the flow of water to achieve a slow drip rate that may be, for example, on the order of 0.46 to 2.74 1 minute$^{-1}$

(0.1 to 0.6 gallons-per-minute) per 30.5 m (one hundred feet) of tubing.

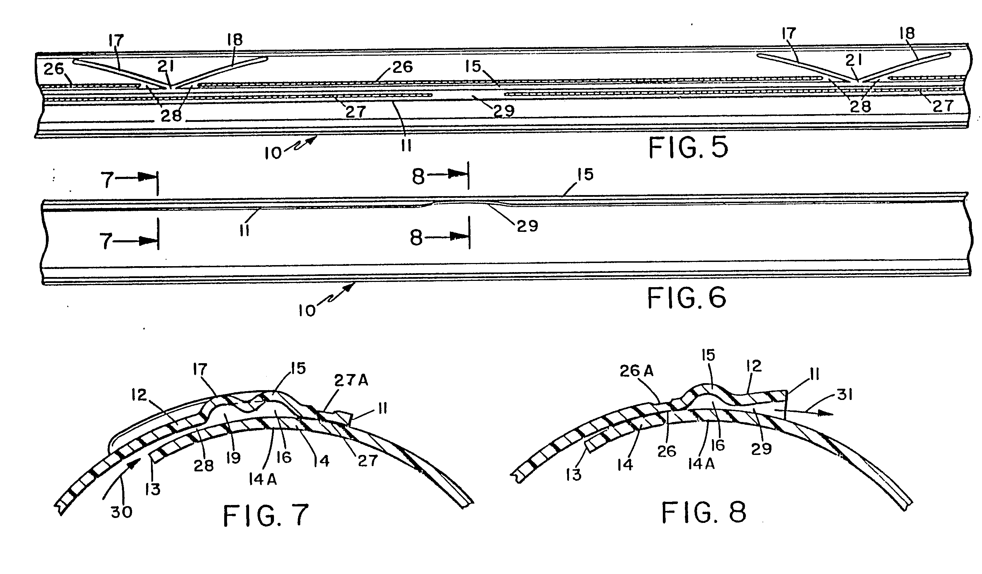

The invention includes inlet means for maintaining fluid communications between the first conduit and the secondary conduit at a series of spaced apart locations along the secondary conduit. This is accomplished in the illustrated embodiment by a series of breaks in the seam, namely breaks 28 in heat sealed portion 26, that define a series of inlet ports. These breaks are discontinuities in heat sealed portion 26 (areas where the heat seal is omitted) positioned adjacent junction 21 (Figure 5). They allow water to flow down inlet channels 17 and 18 into the secondary conduit fluid formed by groove 16.

The invention also includes outlet means for fluid communications between the secondary conduit and a series of spaced apart locations along the exterior of the tubing structure. This is accomplished in the illustrated embodiment by another series of breaks in the heat sealed seam, namely breaks 29 in heat sealed portion 27, that define a series of outlet ports (Figure 5). These breaks may be spaced evenly between the inlet ports defined by breaks 26, and they allow water that has entered the secondary conduit defined by groove 16 to flow slowly from the secondary conduit to the exterior of the tubing structure. Breaks on the order of 1.9 cm (3/4-inch) long are employed in the illustrated embodiments although other sizes are satisfactory. Figure 6 shows edge 11 slightly raised in the area of break 29 to illustrate the outlet port.

Further details of the inlet ports defined by breaks 28 are shown in Figure 7. Depression 27A represents a slight deforming of edge portion 12 caused by the application of pressure to form heat sealed portion 27. A corresponding depression adjacent heat sealed portion 26 is not shown in Figure 7 since this portion of the seam is broken by break 28. Each break 28 in the heat sealed seam allows water to pass in the direction illustrated by arrow 30 between first edge portion 12 and second edge portion 14. This enables water to flow as down the inlet channels into the secondary conduit defined by groove 16.

As the second edge portion flexes in the area designated 14A toward edge portion 12 under pressure of water within the main conduit (Figure 7), the passageway into and along the secondary conduit is slightly decreased in size and the rate of water flow correspondingly decreased. This acheives an automatic throttling effect that regulates the flow of water to maintain a steady drip rate from the secondary conduit even though the pressure of water in the main conduit varies, variance over a range from about 34.5 to 103.4 kN/m² (5 to 15 pounds-per-square-inch) being typical.

The details of the outlet ports defined by breaks 29 are similar (Figure 8). Like depression 27A in Figure 7, depression 26A in Figure 8 represents a slight deforming related to heat sealed portion 26. And each break 29 in the heat sealed seam enables first edge portion 12 and second edge portion 16 to separate so that water can trickle out of the secondary conduit defined by groove 16. Water is thereby emitted in the direction illustrated by arrow 31.

The finished tubing may be buried adjacent rows of crops, lengths up to 0.2 km (1/8-mile) or more being suitable. Water pumped into one end of the tubing flows along the tubing, some entering the secondary conduit at each subsequent inlet port. Water then flows from the inlet ports along the secondary conduit to the outlet ports where it is emitted into the soil at a substantially consistant rate along the tubing.

Thus, the drip irrigation tape of this invention employs the expedient of making the secondary conduit part of the seam. But unlike other drip irrigation tape, this invention does so with a strip of material having a preformed groove extending along one edge that resists deformation. The preformed groove resists external forces tending to collapse it as well as electrostatic forces tending to pull the two edge portions together.

In addition, the heat sealed seam of one embodiment employs breaks in the seam to define inlet passageways and outlet passageways at spaced apart locations along the tape. These passageways can be easily and inexpensive fabricated with the preformed groove and heat sealed seam to achieve a controlled drip rate along a length of tubing that is not dependent on outlet port size and less prone to malfunction.

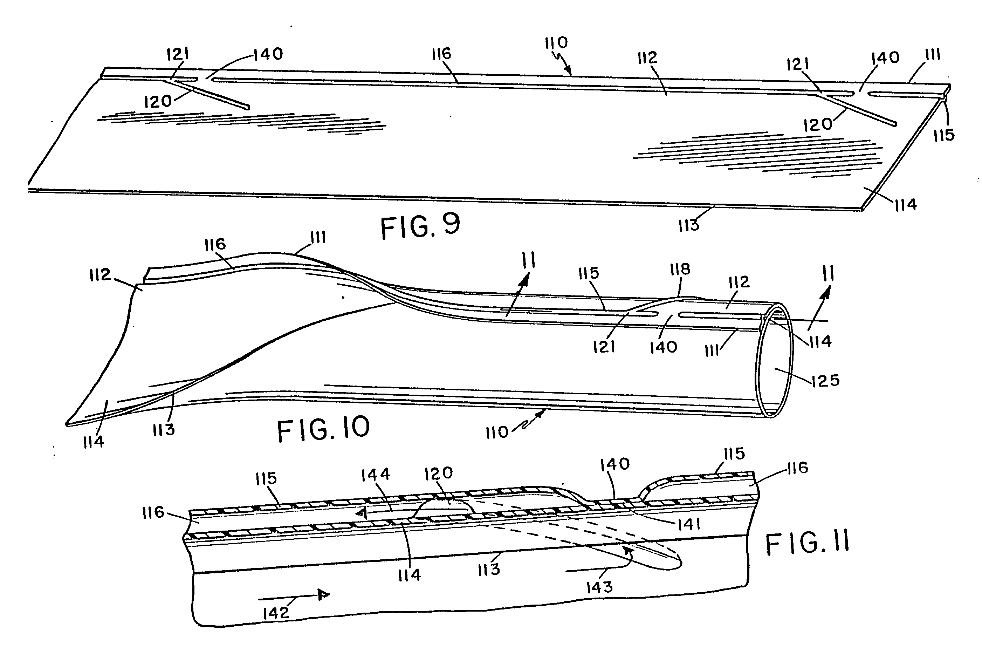

Modifications within the inventive concepts of this invention include those illustrated in the alternate embodiment of Figures 9—11. Reference numerals in these figures are increased by 100 over those designating similar parts in Figures 1—8. The alternate embodiment illustrated in these figures employs only one inlet channel at each junction rather than the pair of inlet channels, channels 19 and 20 in Figures 1—3. Inlet channels 120 (Figures 9—11), formed by preformed portions 118, intersect groove 116 at junctions 121 to define the inlets. These inlets maintain fluid communications between first conduit 125 and the second conduit defined by groove 116 much like the inlets in the embodiment of Figures 1—8.

But there is a difference in the vicinity of each junction 121. This difference is the secondary conduit divider, divider 140, formed by joining first edge portion 112 to second edge portion 114 in joint 141 slightly downstream from each junction 121. Dividers 140 are formed adjacent each junction 121 in this position by crushing preformed portion 115 during heat sealing, or by omitting groove 116 in this area during the shaping of first edge portion 112 with the two edge portions being then joined together in joint 141 to block the secondary conduit adjacent the junctions.

This divides the secondary conduit into segments that are the general length of the interval between junctions. Water entering the secondary conduit through any particular inlet channel can only flow out of an outlet that is located along the corresponding segment of the secondary conduit.

By locating just one outlet along each segment near the end of the segment opposite the inlet channel, water flow can be more precisely controlled. In addition, the path the water takes along the secondary conduit can be lengthened in this way so that secondary conduit size can be increased for the same drip rate. Furthermore, with the inlet channel inclined, as illustrated, relative to the direction of water flow in the main conduit (the direction of water flow being illustrated by arrow 142 in Figure 11), any particulate material in the water tends to be swept past the inlet channel instead of flowing back into the inlet with water following the path of arrows 143 and 144. Hence, this modification in the design provides additional benefits.

Claims

1. A method for fabricating tubing suitable for drip irrigation applications, which comprises:
folding a strip (10, 110) of flexible material having a first side edge portion (12, 112) and a second side edge portion (14, 114) lengthwise with the first side edge portion and the second side edge portion overlapping to form a first conduit (25, 125); and
joining the first side edge portion (12, 112) and the second side edge portion (14, 114) together along two parallel seal lines (26, 27) to form a seam in which a secondary conduit (16) is defined and along which breaks (28, 29) in the seam define a series of inlet ports (30) between the first conduit (25, 125) and the secondary conduit and a series of outlet ports (31) between the secondary conduit and the exterior of the tubing structure, characterised by the steps of extruding the strip (10, 110), molding the first side edge portion (12, 112) of the strip while the material of the strip is still molten to form an indented groove (16, 116) in the first side edge portion (12, 112), folding the strip (10, 110) with said overlapping edge portions (12, 112; 14, 114) in face-to-face contact and joining said edge portions (12, 112; 14, 114) in face-to-face contact whereby the seal lines (26, 27) are formed on opposite sides of the groove (16, 116) which defines the secondary conduit, the secondary conduit being of height equal to the depth of the groove (16, 116).

2. A method as claimed in claim 1, characterised in that it further comprises preforming a series of inlet channels (19, 20, 120) in the first side edge portion (12, 112) that intersect the groove (16, 116) at spaced apart locations.

3. A method as claimed in claim 2, characterised in that it further comprises overlapping the first side edge portion (12, 112) and the second side edge portion (14, 114) so that a part of the second edge portion (14, 114) overlaps the inlet channel(s) (19, 20, 120) to enable the second edge portion (14, 114) to flex in response to the pressure of a fluid within the first conduit (25, 125) and impede the fluid from flowing into the secondary conduit.

4. A method as claimed in any one of claims 1 to 3, characterised in that joining the first edge portion and the second edge portion comprises heat sealing.

5. A method as claimed in claim 4, characterised in that it further comprises omitting the heat seal at selected locations along the groove to define the inlet ports (30) and the outlet ports (31).

6. A method as claimed in any one of claims 1 to 5, characterised in that it further comprises segmenting the groove into segments of selected lengths.

7. A method as claimed in any one of the claims 1 to 6, characterised in that the strip is heated prior to shaping, and in that the shaping comprises molding the first edge portion to define the groove.

Patentansprüche

1. Verfahren zur Herstellung einer zur Beträufelung dienenden Rohrleitung mit den Verfahrensschritten:
Zusammenlegen eines einen ersten, sich längs erstreckenden Randbereich (12, 112) und einen zweiten, sich längs erstreckenden Randbereich (14, 114) aufweisenden Streifens (10, 110) aus flexiblem Material, so daß sich der erste Randbereich (12, 112) und der zweite Randbereich (14, 114) zur Bildung eines ersten Kanals (25, 125) überlappen und
Verbinden des ersten Randbereichs (12, 112) mit dem zweiten Randbereich (14, 114) entlang zweier paralleler Abdichtlinien (26, 27) zur Bildung eines Saumes, in dem ein zweiter Kanal (16) ausgebildet ist, entlang welchem Öffnungen (28, 29) in dem Saum eine Reihe von Einlaßöffnungen (30) zwischen dem ersten Kanal (25, 125) und dem zweiten Kanal (16) und eine Reihe von Auslaßöffnungen (31) zwischen dem zweiten Kanal (16) und dem Bereich außerhalb der Rohrleitung bilden, gekennzeichnet durch die Verfahrensschritte:
Extrudieren des Streifens (10, 110), Formen des ersten Randbereichs (12, 112) des Streifens (10, 110), wobei das Material des Streifens (10, 110) noch geschmolzen ist, um in dem ersten Randbereich (12, 112) eine eingedrückte Nut (16, 116) auszuformen, Zusammenlegen des Streifens (10, 110) derart, daß die einander überlappenden Randbereiche (12, 112; 14, 114) aneinanderliegen und Verbinden der aneinanderliegenden Randbereiche (12, 112; 14, 114), wobei die Abdichtlinien (26, 27) auf einander gegenüberliegenden Seiten der den zweiten Kanal bildenden Nut (16, 116) ausgebildet sind und wobei der zweite Kanal eine Höhe aufweist, die der Tiefe der Nut (16, 116) entspricht.

2. Verfahren nach Anspruch 1, dadurch gekennzeichnet, daß in dem ersten Randbereich (12, 112) eine Reihe die Nut (16, 116) an voneinander beabstandeten Stellen kreuzende Einlaßkanäle (19, 20, 120) ausgebildet werden.

3. Verfahren nach Anspruch 2, dadurch gekennzeichnet, daß sich der erste Randbereich (12, 120) und der zweite Randbereich (14, 114) derart überlappen, daß ein Teil des zweiten Randbereichs (14, 114) den bzw. die Einlaßkanäle (19, 29, 120) derart überlappt, daß sich der zweite Randbereich (14, 114) auf den Druck einer Flüssigkeit innerhalb des ersten Kanals (25, 125) hin dehnt und dabei die Flüssigkeit daren hindert, in den zweiten Kanal (16) zu strömen.

4. Verfahren nach einem der Ansprüche 1 bis 3, dadurch gekennzeichnet, daß das Verbinden des ersten Randbereichs (12, 112) mit dem zweiten Randbereich (14, 114) den Vorgang des Hießversiegelns bzw. Heißverklebens beinhaltet.

5. Verfahren nach Anspruch 4, dadurch gekennzeichnet, daß zur Ausbildung der Einlaßöffnungen (30) und der Auslaßöffnungen (31) das Heißversiegeln bzw. Heißverkleben an ausgewählten Stellen entlang der Nut (16, 116) unterlassen wird.

6. Verfahren nach einem der Ansprüche 1 bis 5, dadurch gekennzeichnet, daß die Nut (16, 116) in Segmente ausgewählter Länge unterteilt wird.

7. Verfahren nach einem der Ansprüche 1 bis 6, dadurch gekennzeichnet, daß der Streifen (10, 110) vor der Formgebung erhitzt wird und daß die Formgebung das Formen des ersten Randbereichs (12, 112) zur Ausbildung der Nut (16, 116) umfaßt.

**Revendications**

1. Procédé de fabrication de tuyaux destinés à des applications d'irrigation par gouttes, ce procédé consistant à:

replier dans le sens de la longueur une bande (10, 110) d'un matériau flexible comportant une première partie de bord latérale (12, 112) et une seconde partie de bord latérale (14, 114) de façon que la première partie de bord latérale et la seconde partie de bord latérale se recouvrent l'une l'autre pour former un premier conduit (25, 125);

relier ensemble la première partie de bord latérale (12, 112) et la seconde partie de bord latérale (14, 114) le long de deux lignes de joint parallèles (26, 27) pour former un joint dans lequel est défini un conduit secondaire (16) et le long duquel des coupures (28, 29) du joint définissent une série d'orifices d'entrée (30) entre le premier conduit (25, 125) et le conduit secondaire, ainsi qu'une série d'orifices de sortie (31) entre le conduit secondaire et l'extérieur de la structure de tuyau,

procédé caractérisé en ce qu'il comprend les différentes étapes consistant à extruder la bande (10, 110), à mouler la première partie de bord latérale (12, 112) de la bande pendant que le matériau de cette bande est encore fondu, pour former une rainure en creux (16, 116) dans la première partie de bord latérale (12, 112), replier la bande (10, 110) de façon que les parties de bords en recouvrement (12, 112; 14, 114) soient en contact face contre face, et relier les parties de bords (12, 112; 14, 114) en contact face à face, de manière à former, sur les côtés opposés de la rainure (16, 116), les lignes de joint (26, 27) qui définissent le conduit secondaire, ce conduit secondaire présentant une hauteur égale à la profondeur de la rainure (16, 116).

2. Procédé selon la revendication 1, caractérisé en ce qu'il comprend en outre l'étape consistant à préformer, dans la première partie de bord latérale (12, 112) une série de rigoles d'entrée (19, 20, 120) qui coupent la rainure (16, 116) en des points espacés.

3. Procédé selon la revendication 2, caractérisé en ce qu'il comprend en outre l'étape consistant à faire se recouvrir la première partie de bord latérale (12, 112) et la seconde partie de bord latérale (14, 114) de façon qu'une partie de la seconde partie de bord (14, 114) recouvre la ou les rigoles d'entrée (19, 20, 120) pour permettre à la seconde partie de bord (14, 114) de fléchir sous l'effet de la pression d'un fluide se trouvant dans le premier conduit (25, 125), et d'empêcher le fluide de s'écouler dans le conduit secondaire.

4. Procédé selon l'une quelconque des revendications 1 à 3, caractérisé en ce que la jonction de la première partie de bord à la seconde partie de bord est constituée par un scellage à chaud.

5. Procédé selon la revendication 4, caractérisé en ce qu'il consiste en outer à supprimer le joint à chaud en des points sélectionnés le long de la rainure pour définir les orifices d'entrée (30) et les orifices de sortie (31).

6. Procédé selon l'une quelconque des revendications 1 à 5, caractérisé en ce qu'il consiste en outre à diviser la rainure en segments de longueurs sélectionnées.

7. Procédé selon l'une quelconque des revendications 1 à 6, caractérisé en ce que la bande est chauffée avant d'être mise en forme, et en ce que la mise en forme comprend le moulage de la première partie de bord pour définir la rainure.

FIG. 1

FIG. 2

FIG. 3

FIG. 4

EP 0 196 763 B1

FIG.5

FIG.6

FIG.7

FIG.8

FIG. 9

FIG. 10

FIG. 11

EP 0 196 763 B1